# EUROPÄISCHE PATENTSCHRIFT

(11) **EP 2 178 926 B1**
(45) Veröffentlichungstag und Bekanntmachung des Hinweises auf die Patenterteilung: **19.10.2011**
(21) Anmeldenummer: 08787056.4
(22) Anmeldetag: 08.08.2008
(51) Int. Cl.: C08F 2/00, C08F 20/06

(54) **HERSTELLUNG WASSERABSORBIERENDER HARZE**
PRODUCTION OF WATER-ABSORBENT RESINS
FABRICATION DE RÉSINES ABSORBANT L'EAU

(30) Priorität: 10.08.2007 EP 07114212
(43) Veröffentlichungstag der Anmeldung: 28.04.2010
(73) Patentinhaber: BASF SE, 67056 Ludwigshafen (DE)
(72) Erfinder: FUNK, Rüdiger, 65527 Niedernhausen (DE); HEIDE, Wilfried, 67251 Freinsheim (DE); WEISMANTEL, Matthias, 63637 Jossgrund (DE); HAMMON, Ulrich, 68163 Mannheim (DE); BENNET, Andrea Karen, 68161 Mannheim (DE)
(86) Internationale Anmeldenummer: PCT/EP2008/060465
(87) Internationale Veröffentlichungsnummer: WO 2009/021921

(56) Entgegenhaltungen:
- EP-A1- 0 024 534
- EP-A2- 1 026 145
- US-A1- 2004 216 786

## Beschreibung

Die vorliegende Erfindung betrifft ein Verfahren zur Herstellung wasserabsorbierender Harze, bei dem man an einem Acrylsäure-Produktionsort Acrylsäure herstellt, die Acrylsäure durch eine Pipeline zu einem Acrylsäure-Verarbeitungsort leitet und dort einer radikalischen Polymerisation unterzieht.

Wasserabsorbierende Harze bzw. hydrogelbildende Polymerisate, auch als Superabsorber oder SAP (Superabsorbing Polymers) bezeichnet, sind in der Lage, wässrige Flüssigkeiten unter Bildung eines Hydrogels zu absorbieren und dadurch zu binden. Superabsorber finden daher insbesondere in Hygieneartikeln wie Windeln, Inkontinenzeinlagen und -hosen, Damenbinden und dergleichen zur Absorption wässriger Körperflüssigkeiten Verwendung. Weitere Anwendungen der Superabsorber betreffen Brandschutz, Kabelummantelungen, Packungsmaterialien und medizinische Anwendungen. Einen umfassenden Überblick über SAP, ihre Anwendung und ihre Herstellung gibt F.L. Buchholz und A.T. Graham (Herausgeber) in "Modern Superabsorbent Polymer Technology", Wiley-VCH, New York, 1998.

Unter den Superabsorbern sind solche auf Basis von Acrylsäure eine besonders wichtige Stoffklasse. Acrylsäure ist eines der reaktivsten bekannten Vinylmonomere. Aus diesem Grund müssen beim Transport monomerer Acrylsäure besondere Sicherheitsvorkehrungen getroffen werden.

Der weltweite Bedarf an SAP hat in den letzten zehn Jahren stark zugenommen und SAP werden derzeit in großen Mengen produziert. Neue Anlagen zur Herstellung von SAP werden zweckmäßigerweise in räumlicher Nähe zu Acrylsäureproduktionsanlagen errichtet, um einen Straßentransport von monomerer Acrylsäure zu vermeiden. Zur Überwindung der Entfernung vom Acrylsäure-Produktionsort zum Acrylsäure-verarbeitungsort, die z. B. 50 m bis 25 km betragen kann, kann man die Acrylsäure am Acrylsäure-Produktionsort in eine Pipeline einspeisen und durch die Pipeline zum Acrylsäure-Verarbeitungsort leiten.

Um eine vorzeitige Polymerisation während der Passage durch die Pipeline zu vermeiden, werden der Acrylsäure üblicherweise Polymerisationsinhibitoren (Stabilisatoren) zugesetzt.

Gebräuchliche Polymerisationsinhibitoren sind Phenothiazin (PTZ) oder phenolische Inhibitoren, wie Hydrochinon oder p-Methoxyphenol (Hydrochinonmonomethylether, MEHQ). Die phenolischen Inhibitoren entfalten ihre inhibierende Wirkung in Verbindung mit Sauerstoff, z. B. im Kontakt mit Luft.

Die WO 00/20369 empfiehlt zur Vermeidung einer radikalischen Polymerisation während des Transports von Acrylsäure den Zusatz eines phenolischen Polymerisationsinhibitors, wie p-Methoxyphenol, und eines Coinhibitors, insbesondere eines Mangankations. Der Coinhibitor kann z. B. mit einem Kationenaustauscher entfernt werden.

Die US 5,130,471 beschreibt eine stabilisierte Acrylmonomer-Zusammensetzung, die ein Acrylmonomer, Phenothiazin und ein cyclisches Amin mit wenigstens einer Hydroxylgruppe umfasst.

Die EP-A 765 856 offenbart eine stabilisierte Monomerzusammensetzung, die neben Acrylsäure eine Kombination (i) eines Nitroxylradikals und/oder eines Hydroxylamins und (ii) einer diheterosubstituierten Benzolverbindung, wie p-Methoxyphenol, umfasst.

Obwohl MEHQ in Verbindung mit molekularem Sauerstoff äußerst wirksam monomere Acrylsäure stabilisiert, bildet es unter feuchten und/oder warmen Klimabedingungen farbige Zerfallsprodukte. Es ist bekannt, dass der Einsatz von MEHQ als Stabilisator zu Verfärbungen der Acrylsäure führt sowie Verfärbungen während der Lagerung von Superabsorbern und daraus hergestellter Erzeugnisse begünstigt. Diese Verfärbungen sind in der Regel unvermeidlich, da Superabsorber oder daraus hergestellte Erzeugnisse auf langen Transportwegen international versandt werden und mitunter längere Zeit, oft unter hoher Luftfeuchtigkeit, gelagert werden. Insbesondere beim Einsatz auf dem Hygienesektor sind verfärbte Produkte unerwünscht.

Als weiteres Problem tritt die Dimerenbildung der Acrylsäure auf. Bei der Dimerisierung wird ein Acrylsäuremolekül an die Doppelbindung eines weiteren Acrylsäuremoleküls addiert, so dass das Michael-Addukt β-Acryloxypropionsäure resultiert. Dimere Acrylsäure ist bereits nach einigen Stunden Standzeit nachweisbar, so dass bei längerer Stand- oder Transportzeit eine erhebliche Dimerenbildung auftritt. Die Diacrylsäurebildung wird durch hohe Temperatur und durch Anwesenheit von Wasser begünstigt.

Dimere Acrylsäue beeinträchtigt zum Einen die Polymerisation der Acrylsäure. Ferner kann einpolymerisierte dimere Acrylsäure bei erhöhter Temperatur rückspalten. Dies äußert sich in einem hohen Restmonomergehalt der Polymerisate und führt zu Emissionen und Geruchsbelästigung.

Zur Begrenzung der Diacrylsäurebildung sollte Reinacrylsäure daher möglichst wasserfrei und bei möglichst tiefer Temperatur gelagert und/oder transportiert werden.

Die DE 10219089 empfiehlt zur Unterdrückung unerwünschter Diacrylsäurebildung, dass die Reinacrylsäure während der gesamten Dauer des Transportes und/oder der Lagerung teilkristallin vorliegt.

Acrylsäure hat einen Schmelzpunkt von 14 °C. Sie kann bei Temperaturen von 14 °C oder darunter in den festen Zustand übergehen. Das Auftauen von kristallisierter Reinacrylsäure erfordert äußerste Vorsicht, weil die Reinacrylsäure beim Kristallisieren an Polymerisationsinhibitor örtlich verarmt und entstabilisierte Acrylsäure unter großer Wärmeentwicklung explosionsartig polymerisieren kann. Die zum Auftauen eingesetzte externe Wärmequelle darf aus Sicherheitsgründen kein zu hohes Temperaturniveau aufweisen, weshalb das Auftauen einen vergleichsweise langen Zeitraum erfordert.

In der Praxis ist es daher von großer Bedeutung, das Gefrieren von Acrylsäure während des Transportes und/oder der Lagerung zu vermeiden. Acrylsäure muss daher in beheizten und/oder isolierten Behältern oder Rohrleitungen transportiert werden. Andererseits sind aufgrund der mit steigender Temperatur zunehmenden Polymerisationsneigung Temperaturen von über etwa 30 °C zu vermeiden.

Der Erfindung liegt die Aufgabe zugrunde, ein vorteilhaftes Verfahren zur Herstellung wasserabsorbierender Harze anzugeben, das sich des Transports von Acrylsäure von einem Acrylsäure-Produktionsort zu einem Acrylsäure-Verarbeitungsort in einer Pipeline bedient.

Die Aufgabe wird gelöst durch ein Verfahren zur Herstellung wasserabsorbierender Harze, bei dem man
a) an einem Acrylsäure-Produktionsort Acrylsäure herstellt,
b) die hergestellte Acrylsäure am Acrylsäure-Produktionsort in Wasser löst, wobei man eine wässrige Acrylsäurelösung erhält,
c) die wässrige Acrylsäurelösung am Acrylsäure-Produktionsort in eine Pipeline einspeist und durch die Pipeline zu einem Acrylsäure-Verarbeitungsort leitet und
d) am Acrylsäure-Verarbeitungsort die wässrige Acrylsäurelösung einer radikalischen Polymerisation unterzieht.

Das erfindungsgemäße Verfahren zeichnet sich durch eine erhöhte Sicherheit beim Transport von Acrylsäure, eine verbesserte Qualität der resultierenden Produkte, sowie eine hohe Wirtschaftlichkeit aus.

Das erfindungsgemäße Verfahren gewährleistet einen sicheren Transport der hochreaktiven Acrylsäure. Das Gefährdungspotential im Schadensfall durch vorzeitige Polymerisation unter extremer Hitzeentwicklung, wie es bei Reinacrylsäure vorliegt, wird durch das erfindungsgemäße Verfahren vollständig ausgeschlossen, da die Acrylsäure durch das wässrige Lösungsmittel "verdünnt" ist und die spezifische Wärmekapazität bzw. die Verdampfungsenthalpie des Wassers den maximalen Temperaturanstieg begrenzen.

Bei der Passage der wässrigen Acrylsäurelösung durch die Pipeline ist die Bildung dimerer Acrylsäure im Vergleich zum Transport wasserfreier Acrylsäure nicht nennenswert erhöht. Dies ist unerwartet, weil bereits geringe Wasserspuren in Reinacrylsäure die Dimerenbildung stark begünstigen, vgl. F. M. Wampler III in Plant/Operations Progress, Vol. 7, No. 3, Juli 1988 "Formation of Diacrylic Acid During Acrylic Acid Storage". Vermutlich nimmt die Geschwindigkeit der Dimerenbildung bei höheren Wassergehalten aufgrund der zunehmenden Verdünnung der Acrylsäure wieder ab.

Ein zusätzlicher Vorteil besteht darin, dass eine Temperierung von Behältern, Rohrleitungen und Pipelines unterbleiben kann, in denen die wässrige Acrylsäurelösung geführt wird, weil der Erstarrungspunkt der wässrigen Acrylsäurelösung niedriger ist als der wasserfreien Acrylsäure. Eine Kühlung der Pipeline kann jedoch wünschenswert sein, um die Bildung dimerer Acrylsäure weiter zu reduzieren.

Durch die Bereitstellung der wässrigen Lösung von Acrylsäure entfällt am Verarbeitungsort der Schritt des Auflösens bzw. Verdünnens unmittelbar vor der Polymerisation. Der Transport der wässrigen Lösung in einer Pipeline verursacht - im Gegensatz zum Transport auf der Straße - keine erhöhten Transportkosten ("Transport von Wasser").

Die wässrige Acrylsäurelösung wird am Acrylsäure-Produktionsort durch Auflösen von frisch hergestellter Acrylsäure in Wasser erhalten. Bei dem zum Lösen der Acrylsäure verwendeten Wasser kann es sich z. B. um Leitungswasser handeln, vorzugsweise verwendet man aber entmineralisiertes Wasser, z. B. Dampfkondensat. Die in der wässrigen Lösung enthaltene Acrylsäure liegt in ihrer freien Säureform, d. h. in nicht neutralisierter Form vor. Die wässrige Lösung ist ein homogenes Gemisch aus Acrylsäure und Wasser, worin Wasser gegenüber der Acrylsäure im molaren Überschuss vorliegt.

In einer Ausführungsform des Verfahrens weist die am Acrylsäure-Produktionsort in die Pipeline eingespeiste wässrige Acrylsäurelösung einen Gehalt an gelöstem molekularen Sauerstoff von wenigstens 2 ppm, z. B. 2 bis 10 ppm, vorzugsweise 3 bis 8 auf. Am Acrylsäure-Verarbeitungsort entfernt und/oder verdrängt man den gelösten molekularen Sauerstoff zumindest teilweise aus der wässrigen Acrylsäurelösung.

Molekularer Sauerstoff (O₂) wirkt als Radikalfänger und hemmt bzw. retardiert die radikalische Polymerisation der Acrylsäure. Durch Einhalten einer Mindestkonzentration an gelöstem molekularen Sauerstoff kann die Gefahr einer unerwünschten Polymerisation der Acrylsäure während der Passage durch die Pipeline verhindert werden. In bevorzugten Ausführungsformen misst man den Gehalt an molekularem Sauerstoff in der wässrigen Acrylsäurelösung und vergleicht den Messwert mit einem Referenzwert. In der Regel enthält das zum Lösen der Acrylsäure verwendete Wasser eine ausreichende Menge an gelöstem molekularen Sauerstoff.

Die zumindest teilweise Entfernung des gelösten molekularen Sauerstoffs kann durch Behandlung mit einem Inertgas, vorzugsweise Stickstoff, erfolgen. Die Behandlung mit dem Inertgas kann z. B. durch Strippen erfolgen. Alternativ kann man die wässrige Acrylsäurelösung mit Inertgas versetzen, so dass man einen flüssig-gasförmiggemischtphasigen Strom erhält. Die Inertgasphase, die im Stoffübergangskontakt mit der wässrigen Acrylsäurelösung steht, ist sauerstofffrei oder weist einen sehr niedrigen Sauerstoffpartialdruck auf, so dass solange gelöster Sauerstoff aus der flüssigen Phase in die Gasphase übertritt, bis ein Verteilungsgleichgewicht erreicht ist.

Beim erfindungsgemäßen Verfahren kann die Einsatzmenge von Polymerisationsinhibitoren verringert werden bzw. man kann auf Polymerisationsinhibitoren ganz verzichten. Eine aufwändige Entfernung von Polymerisationsinhibitoren z. B. durch Behandlung mit Aktivkohle unmittelbar vor der Polymerisation kann entfallen. Ebenso bewirkt die verringerte Einsatzmenge von Polymerisationsinhibitoren eine dauerhafte Stabilität der hergestellten Produkte gegenüber vom Inhibitor herrührenden Verfärbungen.

In einer bevorzugten Ausführungsform setzt man der wässrigen Acrylsäurelösung daher keinen Polymerisationsinhibitor zu.

Aus Sicherheitsgründen und/oder aufgrund behördlicher Auflagen können gewünschtenfalls geringe Mengen an Polymerisationsinhibitoren dennoch mitverwendet werden.

Geeignete Polymerisationsinhibitoren sind Phenothiazin, phenolische Polymerisationsinhibitoren wie Phenol, Hydrochinon, Hydrochinonmonomethylether (MEHQ), Tocopherole, 2,5-Di-tert-butyl-hydrochinon, Chromanolderivate, wie 2,2,5,7,8-Pentamethyl-6-chromanol, 2,2,5,7-Tetramethyl-6-chromanol, 2,2,5,8-Tetramethyl-6-chromanol, 2,2,7,8-Teramethyl-6-chromanol, 2,2,5,-Trimethyl-6-chromanol, 2,2,7-Trimethyl-6-chromanol, 2,2,8-Trimethyl-6-chromanol, Nitroxylradikale, wie OH-TEMPO, und andere bekannte Polymerisationsinhibitoren.

In vielen Fällen ist bevorzugt, dass man als alleinigen Polymerisationsinhibitor Hydrochinonmonomethylether verwendet. In einer bevorzugten Ausführungsform setzt man der wässrigen Acrylsäurelösung weniger als 20 ppm Hydrochinonmonomethylether als Polymerisationsinhibitor zu.

Vorzugsweise beträgt der Gesamtgehalt der Monomer-Zusammensetzung an Polymerisationsinhibitor(en) weniger als 100 ppm, vorzugsweise weniger als 50 ppm, insbesndere weniger als 40 ppm, am meisten bevorzugt weniger als 20 ppm, bezogen auf Acrylsäure.

Die wässrige Acrylsäurelösung enthält im Allgemeinen 25 bis 65 Gew.-%, vorzugsweise 35 bis 55 Gew.-%, am meisten bevorzugt 41 bis 46 Gew.-%, Acrylsäure.

Die durchschnittliche Verweilzeit der wässrigen Acrylsäurelösung in der Pipeline beträgt z. B. 0,5 Minuten bis 48 Stunden, meist eine Minute bis eine Stunde. Als "Verweilzeit" wird die mittlere Verweilzeit angesehen, die sich rechnerisch aus dem Leervolumen der Rohrleitung (Länge mal Querschnittsfläche) und dem Durchsatz (Volumen pro Zeiteinheit) ergibt.

Die erhöhte Sicherheit des erfindungsgemäßen Verfahrens kommt besonders zum Tragen, wenn große zusammenhängende Volumina der wässrigen Acrylsäurelösung befördert werden, z. B. wenn die Pipeline ein zusammenhängendes Volumen von wenigstens 1 m³, vorzugsweise wenigstens 5 m³ oder wenigstens 20 m³ wässrige Acrylsäurelösung fasst. Als "zusammenhängendes Volumen" wird das Leervolumen der Rohrleitung (Länge mal Querschnittsfläche) angesehen.

Die wässrige Acrylsäurelösung enthält in der Regel weniger als 100 ppm, insbesondere weniger als 20 ppm und speziell weniger als 10 ppm an Verunreinigungen, die die Polymerisation der Acrylsäure nachteilig beeinflussen. Der Gehalt an aromatischen Aldehyden wie Benzaldehyd und Furfural beträgt vorzugsweise weniger als 25 ppm und insbesondere weniger als 15 ppm. Der Gehalt an Prozessinhibitoren wie Phenothiazin beträgt vorzugsweise weniger als 10 ppm, insbesondere weniger als 5 ppm und am meisten bevorzugt weniger als 0,1 ppm.

Vorzugsweise sind die folgenden Verunreinigungen maximal in der angegebenen Konzentration enthalten:

| | |
|---|---|
| Dimere Acrylsäure | 1200 ppm |
| Acrolein | 50 ppm |
| Allylalkohol | 50 ppm |
| Allylacrylat | 20 ppm |
| Protoanemonin | 50 ppm |
| Propionsäure | 300 ppm |
| Essigsäure | 1000 ppm |
| Furfural | 22 ppm |
| Benzaldehyd | 1 ppm |
| Schwermetalle | 5 ppm (als Pb gerechnet) |
| Eisen | 2 ppm |
| Phenothiazin | 1 ppm |

Alle ppm Angaben sind Gew.-ppm, bezogen auf Acrylsäure.

Acrylsäure der angegebenen Reinheit kann erhalten werden, wenn die Acrylsäure-Herstellung wenigstens einen Kristallisationsschritt und/oder einen Destillationsschritt umfasst.

Im Allgemeinen stellt man Acrylsäure durch katalytische Gasphasenoxidation von C₃-Kohlenwasserstoffen wie Propan oder Propen und deren Gemische mit Sauerstoff her (zur Herstellung von Acrylsäure aus Propen siehe z.B. Ullmanns Enzyclopedia of Ind. Chem. 5th ed. on CD-ROM, "Acrylic acid and derivatives, 1.3.1. Propenoxidation", Wiley-VCH Weinheim 1997; K. Weisärmel, H.-J. Arpe "Industrielle Org. Chem., 4.Aufl., VCH Verlagsgesellschaft, Weinheim 1994, S. 315-17 sowie DE-A 29 43 707, DE-C 12 05 502, EP-A 117 146 EP-A 293 224 GB 1,450,986; zur Herstellung der Acrylsäure aus Propan siehe z.B. WO 99/20590 und der WO 00/53555).

Das bei der Oxidation von C₃-Kohlenwasserstoffen entstehende gasförmige Reaktionsgemische enthält als kondensierbare Komponenten neben einer Hauptmenge Acrylsäure in der Regel gesättigte Carbonsäuren wie Essigsäure und Propionsäure, eine Reihe von aromatischen Aldehyden wie Furfurale und Benzaldehyd, gegebenenfalls aliphatische Aldehyde wie Formaldehyd, Acrolein sowie gegebenenfalls Acetaldehyd und Propionaldehyd, Protoanemonin sowie diverse ungesättigte oder aromatische Carbonsäuren und deren Anhydride, z.B. Benzoesäure, Maleinsäure, Maleinsäureanhydrid und Phthalsäureanhydrid.

Zur Gewinnung der Acrylsäure aus dem Reaktionsgas sind zahlreiche Verfahren bekannt. Beispielsweise kann man eine Abtrennung der Acrylsäure aus dem heißen Reaktionsgas durch Aufnahme in ein geeignetes Absorptionsmittel, z.B. durch Gegenstromabsorption mit einem hochsiedenden Lösungsmittel, beispielsweise einem Gemisch aus Diphenylether und Diphenyl (siehe DE-A 21 36 396, DE-A 43 08 087 sowie Ullmanns Enzyclopedia of Ind. Chem. 5th ed. on CD-ROM, loc. cit.) oder durch Absorption in Wasser (siehe z.B. EP-A 511 111 und dort zitierte Literatur) erreichen und zur Gewinnung der Acrylsäure anschließend das Absorbtionsmittel entfernen, beispielsweise über destillative Trennverfahren.

In anderen Verfahren werden alle kondensierbaren Komponenten des Reaktionsgases, d.h. Acrylsäure, das Reaktionswasser sowie die oben erwähnten Verunreinigungen, weitgehend vollständig kondensiert (sog. Totalkondensat). Die hierbei erhaltene wasserhaltige Acrylsäure wird anschließend über Destillation mit azeotropen Schleppern (siehe beispielsweise DE-A 34 29 391 und JP-A 1124766), durch Extraktionsverfahren mit organischen Lösungsmitteln (siehe z.B. DE-A 21 64 767, JP-A 58140039, US 3,553,261, US 4,219,389, GB 1,427,223, US 3,962,074 und DE 23 23 328) vom Wasser weitgehend befreit.

Durch die oben genannten Verfahren gewinnt man Acrylsäure-Rohprodukte, die als Rohacrylsäure bezeichnet werden.

Die weitere Aufreinigung der Rohacrylsäure kann durch Destillation erfolgen. Fakultativ kann man in einer so genannten Leichtsieder-Kolonne zunächst eine niedriger als die Reinacrylsäure siedende Fraktion abtrennen. Anschließend trennt man die Rohacrylsäure thermisch in Acrylsäure-haltige Brüden und einen Rückstand und kondensiert die Brüden zu Reinacrylsäure. Es kann sich um eine einfache Destillation, d.h. eine Destillation, bei der im wesentlichen kein Stoffaustausch zwischen Kondensat und Brüden erfolgt, als auch eine Rektifikation handeln, bei der ein Teil des Kondensats im Gegenstrom zu den aufsteigenden Brüden geführt wird. Eine Ausführungsform besteht darin, dass man die behandelte Rohacrylsäure in einer Kolonne mit Umlaufverdampfer in eine erste Menge Acrylsäure-haltiger Brüden und einen ersten Rückstand trennt, den ersten Rückstand in einem Filmverdampfer in eine zweite Menge Acrylsäure-haltiger Brüden und einen zweiten Rückstand trennt, die erste und zweite Menge Acrylsäure-haltiger Brüden vereinigt und zu Reinacrylsäure kondensiert, und den zweiten Rückstand verwirft.

Die Destillation von Acrylsäure ist jedoch nicht unproblematisch, da sie bei thermischer Belastung sehr leicht polymerisiert. Daher müssen der Acrylsäure während der Destillation Prozess-Polymerisationsinhibitoren zugesetzt werden. Die als Destillat anfallende Acrylsäure wird dann mit einem Polymerisationsinhibitor für den Transport und/oder die Lagerung, z.B. Hydrochinonmonomethylether (MEHQ), versetzt.

Als Alternative zur Destillation wurde im Stand der Technik verschiedentlich auch die Kristallisation der Acrylsäure vorgeschlagen, beispielsweise in US 4,493,719, EP-A 616 998, EP-A 648 520, EP-A 715 870, EP 776 875, WO 98/25889 und WO 01/77056. Zur Gewinnung der aufgereinigten Acrylsäure wird das Kristallisat aufgeschmolzen. Aufgrund der hohen Polymerisationsneigung der dabei erhaltenen Acrylsäureschmelze müssen zu diesem Zeitpunkt Polymerisationsinhibitoren wie MEHQ zugesetzt werden, was die oben genannten Nachteile zur Folge hat.

In besonders zweckmäßiger Weise erhält man die wässrige Acrylsäurelösung, wenn man Rohacrylsäure in an sich bekannter Weise kristallisiert und die kristallisierte Acrylsäure anstelle eines Aufschmelzvorgangs direkt in Wasser löst.

Zweckmäßigerweise erhält man die wässrige Acrylsäurelösung, indem man
i) eine Rohacrylsäureschmelze einer ein- oder mehrstufigen Kristallisation unterwirft, wobei man kristalline Acrylsäure und eine an Verunreinigungen angereicherte Acrylsäure-haltige Restschmelze erhält,
ii) die Restschmelze von der kristallinen Acrylsäure weitgehend oder vollständig abtrennt, und
iii) die kristalline Acrylsäure in einer zur Lösung der Acrylsäure ausreichenden Menge Wasser aufnimmt, wobei man eine Acrylsäure-Lösung erhält.

Das Verfahren kann analog zu dem Verfahren der DE 102 21 202 durchgeführt werden.

Die Durchführung der Kristallisation der Rohacrylsäure in Schritt i) erfolgt in an sich bekannter Weise. Üblicherweise überführt man die Rohacrylsäure in einen Kristallisator und kristallisiert unter Kühlen einen Teil der Acrylsäure aus. Diese wird nach üblichen Verfahren weitgehend oder vollständig von der Mutterlauge, d.h. der an Verunreinigungen angereicherten Restschmelze, abgetrennt. Gegebenenfalls kann man die so erhaltene kristalline Acrylsäure aufschmelzen und einer oder mehreren, z.B. 2, 3, 4, 5 oder 6 weiteren, aufeinanderfolgenden Kristallisationsstufen zuführen, bis der gewünschte Reinheitsgrad erreicht ist. Vorzugsweise arbeitet man dabei nach dem Gegenstromprinzip, d.h. die Mutterlauge der jeweiligen Kristallisationsstufe wird der jeweils vorangehenden Kristallisationsstufe zugeführt. Sofern man die Kristallisation als mehrstufige Kristallisation durchführt, kann man beim Aufschmelzen des Acrylsäurekristallisats geringe Mengen eines Stabilisators, vorzugsweise eines Hydrochinons oder eines Hydrochinonmonoalkylethers wie Hydrochinonmonomethylether zusetzen. Die Menge liegt dann in der Regel im Bereich von 1 bis 200 ppm und insbesondere im Bereich von 5 bis 100 ppm, bezogen auf das Kristallisat. Ein Zusatz ist jedoch grundsätzlich nur dann in geringen Mengen erforderlich, wenn ein Aufschmelzen der Acrylsäure vorgenommen wird. D.h. im Anschluss an die letzte Kristallisationsstufe wird man in der Regel keinen oder nur geringe Mengen weiteren Stabilisator zusetzen und das Kristallisat auflösen.

In der Regel führt man die Kristallisation in der jeweiligen Kristallisationsstufe so weit, dass wenigstens 10 Gew.-% und vorzugsweise wenigstens 20 Gew.-% der in der Rohacrylsäure enthaltenen Acrylsäure auskristallisiert sind. In der Regel wird man nicht mehr als 90 Gew.-%, vorzugsweise nicht mehr als 80 Gew.-% und insbesondere nicht mehr als 70 Gew.-% der in der jeweiligen Kristallisationsstufe eingesetzten Acrylsäure auskristallisieren, um eine hinreichende Reinigungswirkung zu erzielen.

In einer besonders bevorzugten Ausführungsform erfolgt die Kristallisation in Schritt i) als einstufige Kristallisation, d.h. die Kristallisation wird bis zu dem gewünschten Kristallisationsgrad geführt (Schritt i)), die Restschmelze, im Folgenden auch Mutterlauge wird von der kristallinen Acrylsäure abgetrennt (Schritt ii)) und die kristalline Acrylsäure in Wasser aufgenommen (Schritt iii)).

Die Abtrennung der Restschmelze von der kristallinen Acrylsäurephase erfolgt in an sich bekannter Weise nach üblichen Methoden zur Trennung flüssiger und fester Phasen. Dabei ist es nicht erforderlich, die Restschmelze vollständig von der kristallinen Phase zu trennen. Häufig enthält die in Schritt ii) abgetrennte Acrylsäure noch bis zu 10 Gew.-% Mutterlauge, z.B. 1 bis 10 Gew.-%, bezogen auf die insgesamt abgetrennte Acrylsäure. In der Regel führt man dann vor dem Auflösen der Acrylsäure in Schritt iii) einen der nachfolgend beschriebenen Reinigungsschritte durch.

Das Auflösen der kristallinen Acrylsäure in Schritt iii) erfolgt durch Behandeln der kristallinen Acrylsäure mit einer ausreichenden Menge Wasser. Man kann Wasser vorlegen und die kristalline Acrylsäure eintragen. Alternativ kann man kristalline Acrylsäure vorlegen und mit Wasser versetzen. Eine zunächst erhaltene konzentrierte Lösung kann mit weiterem Wasser verdünnt werden.

Die Herstellung von SAP auf Basis von Acrylsäure erfolgt bekanntermaßen durch radikalische Polymerisation wässriger Monomerlösungen, die im Wesentlichen Acrylsäure und/oder Acrylsäuresalze als polymerisierbare Monomere enthalten. Die Polymerisation erfolgt vorzugsweise als Lösungs- bzw. Gel-Polymerisation in homogener wässriger Phase oder als Suspensionspolymerisation, wobei die wässrige Monomerlösung die disperse Phase bildet. Die bei der Polymerisation anfallenden wasserhaltigen Polymergele werden, gegebenenfalls nach einer Grobzerkleinerung, getrocknet und gegebenenfalls gemahlen. Die so erhaltenen partikulären Polymere werden in der Regel anschließend oberflächennachvernetzt.

Zur Herstellung der wasserabsorbierenden Harze wird die wässrige Acrylsäurelösung in der Regel zumindest teilweise neutralisiert. Die Neutralisation erfolgt am Acrylsäure-Verarbeitungsort. Der Neutralisationsgrad beträgt z. B. 30 bis 80 Mol-%, insbesondere 40 bis 75 Mol-%, beispielsweise 65 bis 75 Mol-% oder 40 bis 50 Mol-%. Als Neutralisationsmittel eignen sich insbesondere Alkalimetallhydroxide, Alkalimetallcarbonate oder Alkalimetallhydrogencarbonate sowie Ammoniak. Das Alkalimetall ist vorzugsweise Natrium und/oder Kalium, insbesondere Natrium.

Alternativ kann auch nicht oder nur in geringem Umfang, z. B. weniger als 30 Mol.-%, neutralisierte Acrylsäure zur Polymerisation verwendet werden. In diesem Fall kann nach erfolgter Polymerisation das erhaltene Polymergel bis zum gewünschten Endneutralisationsgrad nachneutralisiert werden.

Vorzugsweise führt man die Polymerisation unter weitgehendem oder vollständigem Ausschluss von Sauerstoff durch. Vorzugsweise arbeitet man daher unter einer Inertgasatmosphäre. Als Inertgas wird insbesondere Stickstoff oder Wasserdampf eingesetzt. Insbesondere hat es sich bewährt, die zu polymerisierende wässrige Monomerlösung bzw. das monomerhaltige wässrige Polymerisationsmedium vor und/oder während der Polymerisation mit Inertgas zu spülen.

Die Polymerisation erfolgt in der Regel im Temperaturbereich von 0 °C bis 150 °C, vorzugsweise im Bereich von 10 °C und 100 °C, und kann sowohl bei Normaldruck als auch unter erhöhtem oder erniedrigtem Druck durchgeführt werden.

Bezogen auf ihr Gesamtgewicht enthält die zu polymerisierende Monomer-Zusammensetzung in der Regel:
- 50 bis 99,99 Gew.-%, vorzugsweise 70 bis 99,9 Gew.-% und insbesondere 80 bis 99,8 Gew.-% Acrylsäure(salze) als Monomer A,
- 0 bis 49,99 Gew.-%, insbesondere 0 bis 29,9 Gew.-% und insbesondere 0 bis 19,8 Gew.-% eines oder mehrerer mit Acrylsäure copolymerisierbarer, monoethylenisch ungesättigter Monomere B und
- 0,01 bis 20 Gew.-%, insbesondere 0,1 bis 15 Gew.-% und insbesondere 0,2 bis 3 Gew.-% wenigstens einer vernetzend wirkenden Verbindung C.

Hier und im Folgenden sind alle Gewichtsanteile auf das Gesamtgewicht aller zu polymerisierenden Monomere bezogen, wobei Gewichtsangaben von Säuregruppentragenden Monomeren, die auch als Salze vorliegen können, stets auf die Säureform bezogen sind.

Beispiele für geeignete Monomere B sind von Acrylsäure verschiedene Säuregruppentragende Monomere B1, z.B. monoethylenisch ungesättigte Mono- und Dicarbonsäuren mit vorzugsweise 4 bis 8 C-Atomen wie Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure und Fumarsäure; Halbester von monoethylenisch ungesättigten Dicarbonsäuren mit 4 bis 10 vorzugsweise 4 bis 6 C-Atomen, z. B. von Maleinsäure wie Maleinsäuremonomethylester; monoethylenisch ungesättigte Sulfonsäuren und Phosphonsäuren, beispielsweise Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäure, 2-Acrylamido-2-methylpropansulfonsäure, Vinylphosphonsäure und Allylphosphonsäure und die Salze, insbesondere die Natrium-, Kalium- und Ammoniumsalze dieser Säuren.

Bevorzugte Monomere B1 sind Methacrylsäure, Vinylsulfonsäure, Styrolsulfonsäure, 2-Acrylamido-2-methylpropansulfonsäure oder Mischungen dieser Säuren. Der Anteil der Monomere B1 an der Gesamtmonomermenge macht, sofern erwünscht, vorzugsweise 0,1 bis 29,9 und insbesondere 0,5 bis 19,8 Gew.-%, bezogen auf die Gesamtmonomermenge aus.

Zur Optimierung von Eigenschaften der erfindungsgemäßen Polymerisate kann es sinnvoll sein, monoethylenisch ungesättigte Monomere B2 einzusetzen, die keine Säuregruppen tragen, aber mit Acrylsäure und ggf. den Monomeren B1 copolymerisierbar sind und nicht vernetzend wirken. Hierzu gehören beispielsweise monoethylenisch ungesättigte Nitrile wie Acrylnitril, Methacrylnitril, die Amide der vorgenannten monoethylenisch ungesättigten Carbonsäuren, z.B. Acrylamid, Methacrylamid, N-Vinylamide wie N-Vinylformamid, N-Vinylacetamid, N-Methylvinylacetamid, N-Vinylpyrrolidon und N-Vinylcaprolactam. Zu den Monomeren B2 zählen außerdem Vinylester gesättigter C₁-C₄-Carbonsäuren wie Vinylformiat, Vinylacetat und Vinylpropionat, Alkylvinylether mit mindestens 2 C-Atomen in der Alkylgruppe, z. B. Ethylvinylether oder Butylvinylether, Ester monoethylenisch ungesättigter C₃-C₆-Carbonsäuren, z. B. Ester aus einwertigen C₁-C₁₈-Alkoholen und Acrylsäure, Methacrylsäure oder Maleinsäure, Acrylsäure- und Methacrylsäureester von alkoxylierten einwertigen, gesättigten Alkoholen, z. B. von Alkoholen mit 10 bis 25 C-Atomen, die mit 2 bis 200 Mol Ethylenoxid und/oder Propylenoxid pro Mol Alkohol umgesetzt worden sind, sowie Monoacrylsäureester und Monomethacrylsäureester von Polyethylenglykol oder Polypropylenglykol, wobei die Molmassen (Mn) der Polyalkylenglykole beispielsweise bis zu 2000 betragen können. Weiterhin geeignete Monomere B2 sind Styrol und alkylsubstituierte Styrole wie Ethylstyrol oder tert-Butylstyrol. Der Anteil der Monomere B2 an der Gesamtmonomermenge wird vorzugsweise 20 Gew.-% nicht überschreiten und macht, sofern erwünscht, vorzugsweise 0,1 bis 20 Gew.-% aus.

Als vernetzend wirkende Verbindungen C kommen solche Verbindungen in Betracht, die mindestens zwei, z. B. 2, 3, 4 oder 5 ethylenisch ungesättigte Doppelbindungen im Molekül aufweisen. Diese Verbindungen werden auch als Vernetzermonomere C1 bezeichnet. Beispiele für Verbindungen C1 sind N,N'-Methylenbisacrylamid, Polyethylenglykoldiacrylate und Polyethylenglykoldimethacrylate, die sich jeweils von Polyethylenglykolen eines Molekulargewichts von 106 bis 8500, vorzugsweise 400 bis 2000, ableiten, Trimethylolpropantriacrylat, Trimethylolpropantrimethacrylat, Ethylenglykoldiacrylat, Ethylenglykoldimethacrylat, Propylenglykoldiacrylat, Propylenglykoldimethacrylat, Butandioldiacrylat, Butandioldimethacrylat, Hexandioldiacrylat, Hexandioldimethacrylat, Diethylenglykoldiacrylat, Diethylenglykoldimethacrylat, Triethylenglykoldiacrylat, Triethylenglykoldimethacrylat, Dipropylenglykoldiacrylat, Dipropylenglykoldimethacrylat, Tripropylenglykoldiacrylat, Tripropylenglykoldimethacrylat, Allylmethacrylat, Diacrylate und Dimethacrylate von Blockcopolymerisaten aus Ethylenoxid und Propylenoxid, zwei-, drei-, vier- oder fünffach mit Acrylsäure oder Methacrylsäure veresterte mehrwertige Alkohole, wie Glycerin, Trimethylolpropan, Pentaerythrit oder Dipentaerythrit, Ester monoethylenisch ungesättigter Carbonsäuren mit ethylenisch ungesättigten Alkoholen wie Allylalkohol, Cyclohexenol und Dicyclopentenylalkohol, z. B. Allylacrylat und Allylmethacrylat, weiterhin Triallylamin, Dialkyldiallylammoniumhalogenide wie Dimethyldiallylammoniumchlorid und Diethyldiallylammoniumchlorid, Tetraallylethylendiamin, Divinylbenzol, Diallylphthalat, Polyethylenglykoldivinylether von Polyethylenglykolen eines Molekulargewichtes von 106 bis 4000, Trimethylolpropandiallylether, Butandioldivinylether, Pentaerythrittriallylether, Umsetzungsprodukte von 1 Mol Ethylenglykoldiglycidylether oder Polyethylenglykoldiglycidylether mit 2 Mol Pentaerythritoltriallylether oder Allylalkohol, und Divinylethylenharnstoff. Der Anteil der Monomere C1 an der zu polymerisierenden Monomermischung beträgt vorzugsweise 0,01 bis 5 Gew.-% und insbesondere 0,2 bis 3 Gew.-%.

Als vernetzend wirkende Verbindungen C können ferner Verbindungen C2 mit funktionellen Gruppen fungieren, die mit wenigstens zwei Carboxylgruppen des Polymers unter Ausbildung einer kovalenten Bindung reagieren können (gegenüber der Carboxylgruppe komplementär reaktive Gruppen). Als Vernetzer C kommen auch vernetzend wirkende Monomere C3 in Betracht, die neben einer ethylenisch ungesättigten Doppelbindung wenigstens eine weitere gegenüber Carboxylgruppen komplementäre funktionelle Gruppe aufweisen. In Betracht kommen auch Polymere mit einer Vielzahl derartiger funktioneller Gruppen. Geeignete funktionelle Gruppen sind z.B. Hydroxyl-, Amino-, Epoxy- und Aziridingruppen, weiterhin Isocyanat-, Ester- und Amidogruppen sowie Alkyloxysilylgruppen. Zu den geeigneten Vernetzern dieses Typs zählen beispielsweise Aminoalkohole, wie Ethanolamin oder Triethanolamin, Di- und Polyole, wie 1,3-Butandiol, 1,4-Butandiol, Ethylenglykol, Diethylenglykol, Triethylenglykol, Tetraethylenglykol, Polyethylenglykol, Glycerin, Polyglycerin, Propylenglykol, Polypropylenglykol, Trimethylolpropan, Pentaerythrit, Polyvinylalkohol, Sorbit, Stärke, Blockcopolymerisate aus Ethylenoxid und Propylenoxid, Polyamine wie Ethylendiamin, Diethylentriamin, Triethylentetramin, Tetraethylenpentamin, Pentaethylenhexamin und Polyethylenimine sowie Polyamine mit Molmassen von jeweils bis zu 4000000, Ester wie Sorbitanfettsäureester, ethoxylierte Sorbitanfettsäureester, Polyglycidylether wie Ethylenglykoldiglycidylether, Polyethylenglykol-diglycidylether, Glycerindiglycidylether, Glycerinpolyglycidylether, Diglycerinpolyglycidylether, Polyglycerinpolyglycidylether, Sorbitpolyglycidylether, Pentaerythritpolyglycidylether, Propylenglykoldiglycidylether und Polypropylenglykoldiglycidylether, Polyaziridinverbindungen wie 2,2-Bishydroxymethylbutanol-tris[3-(1-aziridinyl)-propionat], Diamide der Kohlensäure, wie 1,6-Hexamethylendiethylenharnstoff, Diphenylmethan-bis-4,4'-N,N'-diethylenharnstoff, Halogenepoxyverbindungen, wie Epichlorhydrin und a-Methylepifluorhydrin, Polyisocyanate, wie 2,4-Toluylendiisocyanat und Hexamethylendiisocyanat, Alkylencarbonate wie 1,3-Dioxolan-2-on und 4-Methyl-1,3-dioxolan-2-on, weiterhin Bisoxazoline und Oxazolidone, Polyamidoamine sowie deren Umsetzungsprodukte mit Epichlorhydrin, ferner polyquaternäre Amine, wie Kondensationsprodukte von Dimethylamin mit Epichlorhydrin, Homo- und Copolymere von Diallyldimethylammoniumchlorid sowie Homo- und Copolymerisate von Dimethylaminoethyl(meth)acrylat, die gegebenenfalls mit beispielsweise Methylchlorid quaterniert sind. Beispiele für Verbindungen C3 sind Hydroxyalkylacrylate und -methacrylate sowie Glycidylester der vorgenannten ethylenisch ungesättigten Carbonsäuren und ethylenisch ungesättigte Glycidylether. Vorzugsweise umfassen die Monomere C wenigstens ein Monomer C1 in den obengenannten Mengen. Vorzugsweise erfolgt die Polymerisation in Abwesenheit von Verbindungen C2.

Geeignete Pfropfgrundlagen können natürlichen oder synthetischen Ursprungs sein. Hierzu zählen Stärken, d. h. native Stärken aus der Gruppe der Maisstärke, Kartoffelstärke, Weizenstärke, Reisstärke, Tapiokastärke, Sorghunstärke, Maniokstärke, Erbsenstärke oder deren Mischungen, modifizierte Stärken, Stärkeabbauprodukte, z. B. oxidativ, enzymatisch oder hydrolytisch abgebaute Stärken, Dextrine, z. B. Röstdextrine sowie niedere Oligo- und Polysaccharide, z. B. Cyclodextrine mit 4 bis 8 Ringgliedern. Als Oligo- und Polysaccharide kommen weiterhin Cellulose, Stärke- und Cellulosederivate in Betracht. Ferner eignen sich Polyvinylalkohole, Homo- und Copolymere des N-Vinylpyrrolidons, Polyamine, Polyamide, hydrophile Polyester oder Polyalkylenoxide, insbesondere Polyethylenoxid und Polypropylenoxid. Geeignete Polyalkylenoxide weisen die allgemeine Formel I auf,

R¹-O-(CH₂-CHX-O)ₙ-R²

worin R¹, R² unabhängig voneinander für Wasserstoff; C₁-C₄-Alkyl; C₂-C₆-Alkenyl, insbesondere Phenyl; oder (Meth)acryl stehen; X für Wasserstoff oder Methyl und n für eine ganze Zahl von 1 bis 1000, insbesondere 10 bis 400 steht.

Als Polymerisationsreaktoren kommen die zur Herstellung üblichen Reaktoren, insbesondere Bandreaktoren, Extruder und Kneter, in Betracht (siehe "Modern Superabsorbent Polymer Technology", Kapitel 3.2.3). Die Polymerisate werden besonders bevorzugt nach einem kontinuierlichen oder diskontinuierlichen Knetverfahren oder einem kontinuierlichen Bandpolymerisationsverfahren hergestellt.

Als Initiatoren kommen grundsätzlich alle Verbindungen in Betracht, die beim Erwärmen auf Polymerisationstemperatur oder aufgrund einer Redoxreaktion unter Bildung von Radikalen zerfallen. Die Polymerisation kann auch durch Einwirkung energiereicher Strahlung, z. B. UV-Strahlung, in Gegenwart von Photoinitiatoren ausgelöst werden. Auch eine Initiierung der Polymerisation durch Einwirkung von Elektronenstrahlen auf die polymerisierbare, wässrige Mischung ist möglich.

Geeignete Initiatoren sind beispielsweise Peroxoverbindungen wie organische Peroxide, organische Hydroperoxide, Wasserstoffperoxid, Persulfate, Perborate, Azoverbindungen und die sogenannten Redoxkatalysatoren. Bevorzugt werden wasserlösliche Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Geeignete organische Peroxide sind beispielsweise Acetylacetonperoxid, Methylethylketonperoxid, tert-Butylhydroperoxid, Cumolhydroperoxid, tert-Amylperpivalat, tert-Butylperpivalat, tert-Butylperneohexanoat, tert-Butylperisobutyrat, tert-Butyl-per-2-ethylhexanoat, tert-Butylperisononanoat, tert-Butylpermaleat, tert-Butylperbenzoat, Di-(2-ethylhexyl)peroxidicarbonat, Dicyclohexylperoxidicarbonat, Di-(4-tert.-butylcyclohexyl)peroxidicarbonat, Dimyristilperoxidicarbonat, Diacetylperoxidicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat. Besonders geeignete Polymerisationsinitiatoren sind wasserlösliche Azostarter, z. B. 2,2'-Azo-bis-(2-amidinopropan)dihydrochlorid, 2,2'-Azobis-(N,N'-dimethylen)isobutyramidin-dihydrochlorid, 2-(Carbamoylazo)isobutyronitril, 2,2'-Azo-bis[2-(2'-imidazolin-2-yl)propan]dihydrochlorid und 4,4'-Azobis-(4-cyanovaleriansäure). Die genannten Polymerisationsinitiatoren werden in üblichen Mengen eingesetzt, z.B. in Mengen von 0,01 bis 5, vorzugsweise 0,05 bis 2,0 Gew.-%, meist 0,05 bis 0,30 Gew.-%, bezogen auf die zu polymerisierenden Monomeren.

Redoxinitiatoren sind bevorzugt. Sie enthalten als oxidierende Komponente mindestens eine der oben angegebenen Peroxoverbindungen und als reduzierende Komponente beispielsweise Ascorbinsäure, Glukose, Sorbose, Ammonium- oder Alkalimetallsulfit, -hydrogensulfit, -thiosulfat, -hyposulfit, -pyrosulfit oder -sulfid, Metallsalze, wie Eisen(II)-ionen oder Natriumhydroxymethylsulfoxylat. Vorzugsweise verwendet man als reduzierende Komponente des Redoxkatalysators Ascorbinsäure oder Natriumsulfit. Als reduzierende Komponente ist auch ein Gemisch aus dem Natriumsalz der 2-Hydroxy-2-sulfinatoessigsäure, dem Dinatriumsalz der 2-Hydroxy-2-sulfonatoessigsäure und Natriumbisulfit bevorzugt. Derartige Gemische sind als Brüggolite® FF6 und Brüggolite® FF7 (Brüggemann Chemicals; Heilbronn; DE) erhältlich. Bezogen auf die bei der Polymerisation eingesetzte Menge an Monomeren verwendet man beispielsweise 3 x 10⁻⁶ bis 1 Mol-% der reduzierenden Komponente des Redoxkatalysatorsystems und 0,001 bis 5,0 Mol-% der oxidierenden Komponente des Redoxkatalysators.

Wenn man die Polymerisation durch Einwirkung energiereicher Strahlung auslöst, verwendet man üblicherweise als Initiator sogenannte Photoinitiatoren.

Der Feuchtigkeitsgehalt des wasserhaltigen Polymergels liegt in der Regel im Bereich 20 bis 80 Gew.-%. Das wasserhaltige Polymergel wird dann in an sich bekannter Weise in ein partikuläres Polymer überführt und anschließend oberflächennachvernetzt.

Hierzu wird das bei der Polymerisation anfallende wasserhaltige Polymergel in der Regel zunächst nach bekannten Methoden zerkleinert. Die Grobzerkleinerung der wasserhaltigen Polymergele erfolgt mittels üblicher Reiss- und/oder Schneidwerkzeuge, z. B. durch die Wirkung einer Austragspumpe im Falle der Polymerisation in einem zylindrischen Reaktor oder durch eine Schneidwalze oder Schneidwalzenkombination im Falle der Bandpolymerisation. Eine weitere Zerkleinerung erfolgt in der Regel mit einem Gel Chopper. Im Fall der Polymerisation in einem Knetreaktor fällt unmittelbar ein trocknungsfähiges Polymergel an.

Das so erhaltenegrob zerkleinerte Polymergel wird anschließend bei erhöhter Temperatur, z. B. im Bereich von 80 °C bis 250 °C und insbesondere im Bereich von 120 °C bis 200 °C, nach bekannten Verfahren getrocknet (siehe "Modern Superabsorbent Polymer Technology" Kapitel 3.2.5). Hierbei erhält man partikuläre Polymere in Form von Pulvern oder Granulaten, die gegebenenfalls zur Einstellung der Partikelgröße noch mehreren Mahl- und Siebvorgängen unterworfen werden (siehe "Modern Superabsorbent Polymer Technology" Kapitel 3.2.6 und 3.2.7).

Vorzugsweise umfasst das erfindungsgemäße Verfahren eine Oberflächennachvernetzung. Die Oberflächennachvernetzung erfolgt in an sich bekannter Weise mit getrockneten, vorzugsweise gemahlenen und abgesiebten Polymerpartikeln. Zur Oberflächenvernetzung werden Verbindungen mit funktionellen Gruppen eingesetzt, die mit wenigstens zwei Carboxylgruppen der Polymere unter Vernetzung reagieren können (Nachvernetzungsmittel). Die funktionellen Gruppen können im Nachvernetzungsmittel in latenter Form vorliegen, d.h. sie werden erst unter den Reaktionsbedingungen der Oberflächennachvernetzung freigesetzt. Geeignete funktionelle Gruppen in Nachvernetzungsmitteln sind Hydroxylgruppen, Glycidylgruppen, Alkoxysilylgruppen, Aziridingruppen, primäre und sekundäre Aminogruppen, N-Methylolgruppen (= N-Hydroxymethylgruppen, N-CH₂-OH-Gruppen), Oxazolidin-Gruppen, Harnstoff- und Thioharnstoffgruppen, gegebenenfalls reversibel blockierte Isocycanat-Gruppen sowie cyclische Carbonat-Gruppen wie in Ethylencarbonat. Zur Oberflächennachvernetzung werden die Nachvernetzungsmittel, vorzugsweise in Form einer wässrigen Lösung auf die Oberfläche der Polymerisat-Partikel aufgebracht. Die wässrige Lösung kann wassermischbare organische Lösungsmittel enthalten. Geeignete Lösungsmittel sind z.B. C₁-C₄-Alkohole wie Methanol, Ethanol, Isopropanol oder Ketone wie Aceton und Methylethylketon.

Geeignete Nachvernetzungsmittel sind beispielsweise:
- Di- oder Polyglycidylverbindungen wie Phosphonsäurediglycidylether oder Ethylenglykoldiglycidylether, Bischlorhydrinether von Polyalkylenglykolen,
- Alkoxysilylverbindungen,
- Polyaziridine, Aziridin-Einheiten enthaltende Verbindungen auf Basis von Polyethern oder substituierten Kohlenwasserstoffen, beispielsweise Bis-N-aziridinomethan,
- Polyamine oder Polyamidoamine sowie deren Umsetzungsprodukte mit Epichlorhydrin,
- Diole und Polyole, z.B. Ethylenglykol, 1,2-Propandiol, 1,4-Butandiol, Glycerin, Methyltriglykol, Trimethylolethan, Trimethylolpropan, Polyethylenglykole mit einem mittleren Molekulargewicht Mw von 200 - 10000, Di- und Polyglycerin, Pentaerythrit, Sorbit, die Oxethylate dieser Polyole sowie deren Ester mit Carbonsäuren oder mit Kohlensäure wie Ethylencarbonat oder Propylencarbonat,
- Kohlensäurederivate wie Harnstoff, Thioharnstoff, Guanidin, Dicyandiamid, Oxazolidin-2-on und dessen Derivate wie Hydroxyethyloxazolidin-2-on, Bisoxazolin, Polyoxazoline, Di- und Polyisocyanate,
- Di- und Poly-N-methylolverbindungen wie beispielsweise Methylenbis(N-methylol-methacrylamid) oder Melamin-Formaldehyd-Harze,
- Verbindungen mit zwei oder mehr blockierten Isocyanat-Gruppen wie beispielsweise Trimethylhexamethylendiisocyanat blockiert mit 2,2,3,6-Tetramethylpiperidinon-4.

Bei Bedarf können saure Katalysatoren wie p-Toluolsulfonsäure, Phosphorsäure, Borsäure oder Ammoniumdihydrogenphosphat zugesetzt werden.

Das Aufbringen der Vernetzer-Lösung erfolgt bevorzugt durch Aufsprühen einer Lösung des Vernetzers in herkömmlichen Reaktionsmischern oder Misch- und Trocknungsanlagen wie beispielsweise Patterson-Kelly-Mischer, DRAIS-Turbulenzmischer, Lödige-Mischer, Schneckenmischer, Tellermischer, Wirbelschichtmischer und Schugi-Mix. Nach Aufsprühen der Vernetzer-Lösung kann ein Temperaturbehandlungsschritt nachfolgen, bevorzugt in einem nachgeschalteten Trockner, bei einer Temperatur von 80 bis 230 °C, bevorzugt 100 bis 210 °C, und besonders bevorzugt 100 bis 150 °C oder 160 bis 200 °C, über einen Zeitraum von 5 Minuten bis 6 Stunden, bevorzugt 10 Minuten bis 2 Stunden und besonders bevorzugt 10 Minuten bis 1 Stunde, wobei sowohl Spaltprodukte als auch Lösungsmittelanteile entfernt werden können. Die Trocknung kann aber auch im Mischer selbst erfolgen, durch Beheizung des Mantels oder Einblasen eines vorgewärmten Trägergases.

Die erhaltenen SAP sind insbesondere zur Herstellung von Hygieneartikeln geeignet. Der Aufbau und die Form von Hygieneartikeln, insbesondere Windeln, Binden und Inkontinenzeinlagen und -hosen für Erwachsene, ist allgemein bekannt und beispielsweise in der EP-A-0 316 518, der EP-A-0 202 127, der DE 19737434, der WO 00/65084, der WO 00/65348 und der WO 00/35502, beschrieben.

Typische Hygieneartikel in Form von Windeln, Binden und Inkontinenzeinlagen und - hosen umfassen:
(A) eine obere flüssigkeitsdurchlässige Abdeckung
(B) eine untere flüssigkeitsundurchlässige Schicht
(C) einen zwischen (A) und (B) befindlichen Kern, enthaltend
(C1) 10 - 100 Gew.-% wasserabsorbierendes Harz
(C2) 0 - 90 Gew.-% hydrophiles Fasermaterial
(D) gegebenenfalls eine sich unmittelbar oberhalb und unterhalb des Kerns (C) sich befindende Tissueschicht und
(E) gegebenenfalls eine zwischen (A) und (C) sich befindende Aufnahmeschicht.

Bei der flüssigkeitsdurchlässigen Abdeckung (A) handelt es sich um die Schicht, die direkten Hautkontakt hat. Das Material hierfür besteht hierbei aus üblichen synthetischen oder halbsynthetischen Fasern oder Filmen von Polyester, Polyolefine, Rayon oder natürlichen Fasern wie Baumwolle. Bei nichtgewebten Materialien sind die Fasern in der Regel durch Bindemittel wie Polyacrylate zu verbinden. Bevorzugte Materialien sind Polyester, Rayon und deren Blends, Polyethylen und Polypropylen.

Die flüssigkeitsundurchlässige Schicht (B) besteht in der Regel aus einer Folie aus Polyethylen oder Polypropylen.

Der Kern (C) enthält neben dem wasserabsorbierenden Harz (C1) hydrophiles Fasermaterial (C2). Unter hydrophil ist zu verstehen, dass sich wässrige Flüssigkeiten schnell über die Faser verteilen. Für gewöhnlich ist das Fasermaterial Cellulose, modifizierte Cellulose, Rayon, Polyester wie Polyethylenterephthalat. Besonders bevorzugt werden Cellulosefasern wie Zellstoff. Die Fasern haben in der Regel einen Durchmesser von 1 bis 200 µm, bevorzugt 10 bis 100 µm. Darüber hinaus haben die Fasern eine Mindestlänge von 2 mm.

Der Anteil des hydrophilen Fasermaterials bezogen auf die Gesamtmenge des Kerns beträgt bevorzugt 20 bis-80 Gew.-%, besonders bevorzugt 30 bis 70 Gew.-%, am meisten bevorzugt 30 bis 50 Gew.-%.

Die Erfindung wird durch die folgenden Beispiele und die beigefügte Figur näher veranschaulicht.

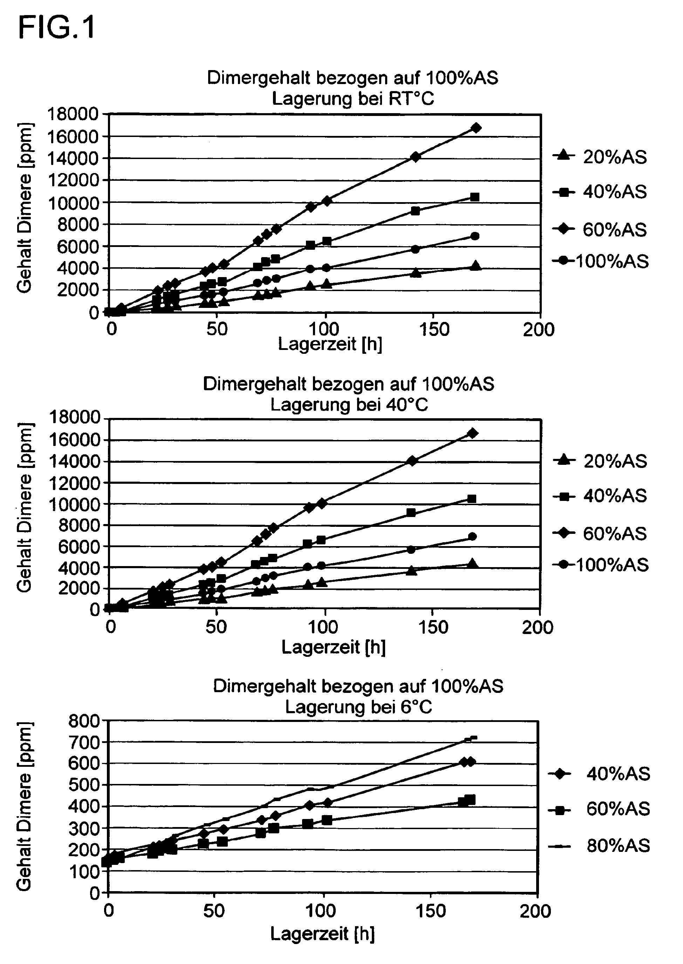

Fig. 1 zeigt den Gehalt an dimerer Acrylsäure in wässrigen Acrylsäurelösungen bzw. reiner Acrylsäure im zeitlichen Verlauf bei Lagerung bei verschiedenen Temperaturen.

### Beispiel 1: Dynamische Differenzkalorimetrie (DSC)

In einem Kalorimeter Mettler TA 3000 wurden etwa 20 mg wässrige Acrylsäurelösung bzw. reine Acrylsäure mit unterschiedlichen Stabilisatorgehalten (MEHQ) in einem Edelstahltiegel unter einer Stickstoffatmosphäre im Temperaturbereich von 30 bis 500 °C mit einer Heizrate von 2,5 K/min erwärmt. Man zeichnete die Temperatur, bei der eine exotherme Reaktion einsetzt, (Onset-Temperatur) und die freigesetzte Wärmemenge (in J/g Probe) auf. Die Ergebnisse sind in der nachstehenden Tabelle zusammengefasst:

**Tabelle: DSC-Unteruchung an wässrigen Acrylsäurelösungen**

| Konzentration Acrylsäure [%] | Konzentration MEHQ [ppm] | Onset-Temperatur [°C] | freigesetzte Wärmemenge [J/g] |
|---|---|---|---|
| 20 | 200 | 195 | 110 |
| 40 | 200 | 185 | 130 |
| 60 | 200 | 175 | 130 |
| 100 | 200 | 140 | 340 |
| 20 | 50 | 210 | 70 |
| 40 | 50 | 180 | 140 |
| 60 | 50 | 175 | 110 |
| 100 | 50 | 145 | 220 |
| 20 | w/o | 210 | 80 |
| 40 | w/o | 185 | 150 |

Man sieht, dass bei allen Stabilisatorgehalten die Onset-Temperatur umso höher ist, je verdünnter die Acrylsäurelösung ist. Gemäß TRAS 410 (Technische Regel für Anlagensicherheit) kann man einen Stoff sicher handhaben, wenn die maximal anzunehmende Temperatur mindestens 100 K unterhalb der Onset-Temperatur liegt. Die Ergebnisse der DSC-Untersuchungen zeigen, dass selbst stabilisierte Acrylsäure nur bis etwa 40 °C sicher handzuhaben ist, während wässrige Acrylsäurelösungen mit einem Gehalt von z. B. 20 bis 60 Gew.-% Acrylsäure auch bei deutlich höheren Temperaturen gehandhabt werden können.

### Beispiel 2: Bildung dimerer Acrylsäure

Wässrige Acrylsäurelösungen bzw. reine Acrylsäure (enthaltend jeweils 200 ppm MEHQ, bezogen auf Acrylsäure) wurden bei unterschiedlichen Temperaturen (6 °C, Raumtemperatur bzw. 40 °C) gelagert. Nach bestimmten Zeitabschnitten wurden Aliqote entnommen und mittels HPLC (Säule: Waters Symmetry 150 x 3,9 mm; 25 °C; mobile Phase: 90 Vol.-% Phosphorsäure (0,1 Vol.-%)/10 Vol.-% Acetonitril; Detektion bei 210 nm) der Gehalt dimerer Acrylsäure (β-Acryloxypropionsäure) bestimmt. Die Ergebnisse sind in Fig. 1 gezeigt (der Gehalt dimerer Acrylsäure ist auf den Acrylsäuregehalt bezogen). Man erkennt, dass die Bildung dimerer Acrylsäure stark temperaturabhängig ist. Während sich bei 6 °C am Ende der Versuchsdauer in allen untersuchten wässrigen Acrylsäurelösungen weniger als 800 ppm dimere Acrylsäure gebildet hatten, betrug der Gehalt dimerer Acrylsäure in allen Proben, die bei Raumtemperatur bzw. 40 °C gehalten wurden, mehr als 4000 ppm.

Um die Bildung dimerer Acrylsäure zu minimieren, sind ein Transport und/oder eine Lagerung bei tiefer Temperatur bevorzugt. Wässrige Acrylsäurelösungen sind hierbei vorteilhaft, weil sie auch bei Temperaturen unter 10 °C flüssig bleiben und gepumpt werden können, während reine Acrylsäure bei etwa 14 °C erstarrt.

## Patentansprüche

1. Verfahren zur Herstellung wasserabsorbierender Harze, bei dem man
a) an einem Acrylsäure-Produktionsort Acrylsäure herstellt,
b) die hergestellte Acrylsäure am Acrylsäure-Produktionsort in Wasser löst, wobei man eine wässrige Acrylsäurelösung erhält,
c) die wässrige Acrylsäurelösung am Acrylsäure-Produktionsort in eine Pipeline einspeist und durch die Pipeline zu einem Acrylsäure-Verarbeitungsort leitet und
d) am Acrylsäure-Verarbeitungsort die wässrige Acrylsäurelösung einer radikalischen Polymerisation unterzieht.

2. Verfahren nach Anspruch 1, wobei die am Acrylsäure-Produktionsort in die Pipeline eingespeiste wässrige Acrylsäurelösung einen Gehalt an gelöstem molekularen Sauerstoff von wenigstens 2 ppm aufweist und man am Acrylsäure-Verarbeitungsort den gelösten molekularen Sauerstoff zumindest teilweise aus der wässrigen Acrylsäurelösung entfernt und/oder verdrängt.

3. Verfahren nach Anspruch 2, wobei man der wässrigen Acrylsäurelösung keinen Polymerisationsinhibitor zusetzt.

4. Verfahren nach Anspruch 2, wobei man der wässrigen Acrylsäurelösung weniger als 20 ppm Hydrochinonmonomethylether als Polymerisationsinhibitor zusetzt.

5. Verfahren nach einem der vorhergehenden Ansprüche, wobei man die wässrige Acrylsäurelösung am Acrylsäure-Verarbeitungsort zumindest teilweise neutralisiert.

6. Verfahren nach einem der vorhergehenden Ansprüche, wobei die wässrige Acrylsäurelösung 25 bis 65 Gew.-%, vorzugsweise 35 bis 55 Gew.-%, Acrylsäure enthält.

7. Verfahren nach einem der vorhergehenden Ansprüche, wobei die durchschnittliche Verweilzeit der wässrigen Acrylsäurelösung in der Pipeline 0,5 Minuten bis 48 Stunden beträgt.

8. Verfahren nach einem der vorhergehenden Ansprüche, wobei die Pipeline ein zusammenhängendes Volumen von wenigstens 1 m³ wässrige Acrylsäurelösung fasst.

9. Verfahren nach einem der vorhergehenden Ansprüche, wobei die Acrylsäure-Herstellung wenigstens einen Kristallisationsschritt umfasst.

10. Verfahren nach einem der Ansprüche 1 bis 8, wobei die Acrylsäure-Herstellung wenigstens einen Destillationsschritt umfasst.

## Claims

1. A process for producing water-absorbing resins, in which
a) acrylic acid is prepared at an acrylic acid production site,
b) the acrylic acid prepared is dissolved in water at the acrylic acid production site to obtain an aqueous acrylic acid solution,
c) the aqueous acrylic acid solution is fed into a pipeline at the acrylic acid production site and passed through the pipeline to an acrylic acid processing site and
d) the aqueous acrylic acid solution is subjected to a free-radical polymerization at the acrylic acid processing site.

2. The process according to claim 1, wherein the aqueous acrylic acid solution fed into the pipeline at the acrylic acid production site has a dissolved molecular oxygen content of at least 2 ppm and the dissolved molecular oxygen is removed and/or displaced at least partly from the aqueous acrylic acid solution at the acrylic acid processing site.

3. The process according to claim 2, wherein no polymerization inhibitor is added to the aqueous acrylic acid solution.

4. The process according to claim 2, wherein less than 20 ppm of hydroquinone monomethyl ether is added as a polymerization inhibitor to the aqueous acrylic acid solution.

5. The process according to any one of the preceding claims, wherein the aqueous acrylic acid solution is at least partly neutralized at the acrylic acid processing site.

6. The process according to any one of the preceding claims, wherein the aqueous acrylic acid solution comprises from 25 to 65% by weight, preferably from 35 to 55% by weight, of acrylic acid.

7. The process according to any one of the preceding claims, wherein the average residence time of the aqueous acrylic acid solution in the pipeline is from 0.5 minutes to 48 hours.

8. The process according to any one of the preceding claims, wherein the pipeline accommodates a continuous volume of at least 1 m³ of aqueous acrylic acid solution.

9. The process according to any one of the preceding claims, wherein the acrylic acid preparation comprises at least one crystallization step.

10. The process according to any one of claims 1 to 8, wherein the acrylic acid preparation comprises at least one distillation step.

## Revendications

1. Procédé pour la préparation de résines absorbant l'eau, dans lequel
a) on prépare de l'acide acrylique en un site de production d'acide acrylique,
b) on dissout l'acide acrylique préparé au site de production de l'acide acrylique dans de l'eau, en obtenant une solution aqueuse d'acide acrylique,
c) on injecte la solution aqueuse d'acide acrylique au site de production d'acide acrylique dans un pipeline et on la guide au travers du pipeline vers un site de transformation d'acide acrylique et
d) on soumet la solution aqueuse d'acide acrylique au site de transformation d'acide acrylique à une polymérisation par voie radicalaire.

2. Procédé selon la revendication 1, où la solution aqueuse d'acide acrylique injectée, au site de production de l'acide acrylique, dans le pipeline présente une teneur en oxygène moléculaire dissous d'au moins 2 ppm et on élimine et/ou chasse au site de traitement de l'acide acrylique l'oxygène moléculaire dissous au moins partiellement de la solution aqueuse d'acide acrylique.

3. Procédé selon la revendication 2, où on n'ajoute pas d'inhibiteur de polymérisation à la solution aqueuse d'acide acrylique.

4. Procédé selon la revendication 2, où on ajoute à la solution aqueuse d'acide acrylique moins de 20 ppm d'hydroquinonemonométhyléther comme inhibiteur de polymérisation.

5. Procédé selon l'une quelconque des revendications précédentes, où on neutralise au moins partiellement la solution aqueuse d'acide acrylique au site de transformation de l'acide acrylique.

6. Procédé selon l'une quelconque des revendications précédentes, où la solution aqueuse d'acide acrylique contient 25 à 65% en poids, de préférence de 35 à 55% en poids, d'acide acrylique.

7. Procédé selon l'une quelconque des revendications précédentes, où la durée de séjour moyenne de la solution aqueuse d'acide acrylique dans le pipeline est de 0,5 minute à 48 heures.

8. Procédé selon l'une quelconque des revendications précédentes, où le pipeline contient un volume cohérent d'au moins 1 m³ de solution aqueuse d'acide acrylique.

9. Procédé selon l'une quelconque des revendications précédentes, où la préparation d'acide acrylique comprend au moins une étape de cristallisation.

10. Procédé selon l'une quelconque des revendications 1 à 8, où la préparation d'acide acrylique comprend au moins une étape de distillation.
